# EUROPÄISCHE PATENTSCHRIFT

(11) **EP 3 342 932 B1**
(45) Veröffentlichungstag und Bekanntmachung des Hinweises auf die Patenterteilung: **30.06.2021**
(21) Anmeldenummer: 17204074.3
(22) Anmeldetag: 21.08.2013
(51) Int. Cl.: E01C 23/088

(54) **SELBSTFAHRENDE FRÄSMASCHINE, SOWIE VERFAHREN ZUM ABLADEN VON FRÄSGUT**
SELF-PROPELLED MILLING MACHINE, AND METHOD FOR UNLOADING MILLED GOODS
FRAISEUSE AUTOMOBILE ET PROCÉDÉ D'ÉVACUATION DE PRODUIT DE FRAISAGE

(30) Priorität: 23.08.2012 DE 102012215013
(43) Veröffentlichungstag der Anmeldung: 04.07.2018
(62) Teilanmeldung aus: 13752630.7
(73) Patentinhaber: Wirtgen GmbH, 53578 Windhagen (DE)
(72) Erfinder: Berning, Christian, 53909 Zülpich (DE); Franzmann, Dirk, 53773 Hennef (DE); Montermann, Armin, 56626 Andernach (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 666 018
- EP-A1- 1 344 445
- EP-A2- 2 573 266
- DE-U1-202007 005 756

## Beschreibung

Die Erfindung betrifft eine selbstfahrende Fräsmaschine nach dem Oberbegriff des Anspruchs 1, sowie ein Verfahren zum Abladen von Fräsgut nach dem Oberbegriff des Anspruchs 9. Bei einer selbstfahrenden Fräsmaschine ist es bekannt, das Fräsgut auf mindestens ein Transportfahrzeug mit einer Ladefläche abzuladen.

Die Fräsmaschine weist eine Steuerung für den Fahr- und Fräsbetrieb auf sowie eine Arbeitswalze zum Fräsen z.B. eines Straßenbelages. Vor oder hinter der Arbeitswalze - in Fahrtrichtung gesehen - befindet sich eine Transportbandeinrichtung, z.B. eine Transportbandeinrichtung mit mindestens einem Transportband. Die Transportbandeinrichtung weist ein Abwurfende auf, an dem das Fräsgut aufgrund der Fördergeschwindigkeit über eine Flugbahn in Form einer Wurfparabel auf die Ladefläche des mindestens einen Transportfahrzeugs abgeladen wird. Das in Transportrichtung letzte oder einzige Transportband der Transportbandeinrichtung kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein.

Im praktischen Betrieb entstehen Probleme bei der Koordination der Fräsmaschine mit dem Transportfahrzeug.

Beispielsweise wird bei einer Vorderlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss. Üblicherweise geschieht die Vermittlung der Information über ein Hupen, so dass, sobald der Fahrzeugführer des Transportfahrzeugs das Hupen vernimmt, das Transportfahrzeug um eine bestimmte Wegstrecke vorbewegt wird. Problematisch ist dabei die Situation, in der der Fahrzeugführer des Transportfahrzeugs das Hupsignal überhört, oder wenn ein anderes vorbeifahrendes Fahrzeug ein Hupsignal abgibt, so dass der Fahrzeugführer des Transportfahrzeugs irrtümlich meint, sein Fahrzeug vorbewegen zu müssen. Überhört der Fahrzeugführer das Hupsignal, kann es zu einer Kollision des schwenkbaren Transportbandes der Transportbandeinrichtung mit dem Transportfahrzeug kommen, oder die Bedienungsperson der Fräsmaschine muss den kontinuierlichen Fräsbetrieb stoppen.

Ein weiteres Problem besteht darin, dass die Bedienungsperson für die Fräsmaschine auch die Beladung der Ladefläche durch Verstellung des Schwenkwinkels, des Höhenwinkels und der Fördergeschwindigkeit des in Transportrichtung letzten oder einzigen Transportbandes der Transportbandeinrichtung übernehmen muss und dadurch von seiner eigentlichen Aufgabe, den Fräsbetrieb durchzuführen, abgelenkt wird. Eine Korrektur des Schwenkwinkels kann beispielsweise bei einem Wechsel der Lenkrichtung der Fräsmaschine notwendig sein.

Auch im Falle einer Hinterlader-Fräsmaschine bestehen Probleme bei der Koordination der Fräsmaschine mit dem Transportfahrzeug, zumal das Transportfahrzeug hinter der Fräsmaschine in Rückwärtsfahrt hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Transportbandeinrichung steuern muss und dem Fahrzeugführer die notwendigen Informationen vermitteln muss.

Der Erfindung liegt daher die Aufgabe zugrunde, eine selbstfahrende Fräsmaschine , sowie ein Verfahren zum Abladen von Fräsgut einer Fräsmaschine zu schaffen, das eine automatische Koordination des Abladevorgangs der im Fräsbetrieb befindlichen Fräsmaschine mit der Bewegung des Transportfahrzeugs ermöglicht.

Zur Lösung dieser Aufgabe dienen die Merkmale der Ansprüche 1 bzw. 9.

Die Erfindung sieht vor, dass die Steuerung ein Erfassungs- und Steuerungssystem aufweist, das die veränderliche Lage der Ladefläche des Transportfahrzeugs und des in Transportrichtung letzten oder einzigen schwenkbaren Transportbandes der Transportbandeinrichtung relativ zum Maschinenrahmen oder die veränderliche Lage der Ladefläche des Transportfahrzeugs relativ zum schwenkbaren Transportband fortlaufend ortet und die Positionierung der Auftreffstelle des Fräsgutes über den Schwenkwinkel und/oder den Höhenwinkel und/oder die Fördergeschwindigkeit des schwenkbaren Transportbandes derart fortlaufend automatisch steuert, dass das abgeworfene Fräsgut innerhalb der Ladefläche auftrifft.

Eine derartige Steuerung ermöglicht es, dass sich die Bedienungsperson der Fräsmaschine auf den Fräsbetrieb und die Fahrt entlang einer vorgegebenen Frässpur konzentrieren kann. Auf diese Weise ist ein automatischer Abladevorgang realisiert, der auch bei Kurvenfahrt für eine automatische Koordination des Abladevorgangs mit der Bewegung der Fräsmaschine und des Transportfahrzeugs sorgt. Beispielsweise kann auch der Schwenkwinkel des in Transportrichtung letzten oder einzigen Transportbandes der Transportbandeinrichtung in Abhängigkeit vom Lenkwinkel der selbstfahrenden Fräsmaschine steuerbar sein. Vorzugsweise ist vorgesehen, dass das Erfassungs- und Steuerungssystem die Positionierung der Auftreffstelle des Fräsgutes derart fortlaufend automatisch steuert, dass das abgeworfene Fräsgut auf die Mitte der Ladefläche oder eine andere vorgebbare Auftreffstelle innerhalb der Ladefläche auftrifft.

Die Ladefläche kann geortet werden und die Lage des Transportbandes und die Fördergeschwindigkeit des schwenkbaren Transportbandes derart geregelt werden, dass die Auftreffstelle auf der Ladefläche unabhängig von den Bewegungen der Fräsmaschine und des Transportfahrzeugs stets an der von der Steuerung vorgegebenen Stelle gehalten wird.

Das Erfassung- und Steuerungssystem kann mindestens einen Detektor aufweisen, der die Lage der Ladefläche und/oder des schwenkbaren Transportbandes der Transportbandeinrichtung fortlaufend detektiert, und/oder weitere Detektoren aufweisen, die den Schwenkwinkel, den Höhenwinkel und/oder die Fördergeschwindigkeit des Transportbandes detektieren.

Bei einem bevorzugten Ausführungsbeispiel ist vorgesehen, dass das Erfassungs- und Steuerungssystem die Lage der Ladefläche und/oder des in Transportrichtung letzten oder einzigen Transportbandes der Transportbandeinrichtung fortlaufend mit Hilfe eines ersten Bildaufnahmesystems oder eines nicht optischen elektronischen Ortungssystems, insbesondere eines Radiofrequenzidentifikationssystems (RFID), ortet, das Daten zur Lagebestimmung der Ladefläche in Relation zum Maschinenrahmen oder zu dem schwenkbaren Transportband liefert.

Das Erfassungs- und Steuerungssystem kann die Daten zur Lagebestimmung mit vorgegebenen Soll-Lagedaten vergleichen, um im Falle von Abweichungen von den vorgegebenen Soll-Lagedaten eine fortlaufende Lagesteuerung für die Lage eines Abwurfendes und/oder der Auftreffstelle des Fräsgutes und/oder eine Geschwindigkeitssteuerung für die Fördergeschwindigkeit entsprechend einer vorgegebenen Auftreffstelle durchzuführen.

Das Erfassungs- und Steuerungssystem kann ein zweites Bildaufnahmesystem aufweisen, das den Befüllungszustand auf der Ladefläche durch Auswertung der Bilddaten erfasst und analysiert, und die Fördergeschwindigkeit und/oder die Lage eines Abwurfendes und/oder der Auftreffstelle des Fräsgutes relativ zur Ladefläche fortlaufend steuert, um die Ladefläche gleichmäßig und/oder nach einem vorgegebenen Beladungsprogramm zu beladen. Ein zweites Bildaufnahmesystem kann entfallen, wenn bereits zur Ortung der Lage der Ladefläche ein Bildaufnahmesystem zum Einsatz kommt, dessen Bilddaten zur Detektion des Befüllungszustandes ebenfalls herangezogen werden können.

Das Erfassungs- und Steuerungssystem kann die Lage der Ladefläche orten, sowie die Lage des in Transportrichtung letzten oder einzigen Transportbandes der Transportbandeinrichtung oder die Position der Auftreffstelle und die Fördergeschwindigkeit derart regeln, dass die Auftreffstelle auf der Ladefläche unabhängig von den Bewegungen der Fräsmaschine und des Transportfahrzeugs stets an der von der Steuerung vorgegebenen Stelle innerhalb der Ladefläche gehalten ist.

Das erste und/oder zweite Bildaufnahmesystem oder ein Detektor für das Radiofrequenzidentifikationssystems (RFID) können am Abwurfende der in Förderrichtung des Fräsgutes einzigen oder letzten Transportbandes angeordnet sein.

Die Anordnung eines solchen Ortungssystems am Abwurfende des Transportbandes ermöglicht es, die relative Lage des Transportfahrzeugs zu dem in Transportrichtung letzten oder einzigen Transportband Fräsmaschine zu erfassen, ohne dass zusätzlich die Lage der Fräsmaschine festgestellt werden muss.

Außerdem können die Bilddaten dahingehend analysiert werden, wie und in welchem Umfang die Ladefläche befüllt ist. Durch Steuerung der Fördergeschwindigkeit und/oder der Lage des Abwurfendes des Transportbandes, bzw. der Auftreffstelle des Fräsgutes relativ zur Ladefläche kann die Ladefläche gleichmäßig beladen werden. Der Befüllungszustand auf der Ladefläche kann von einem Bildaufnahmesystem erfasst und analysiert werden und die Fördergeschwindigkeit und/oder die Lage des Abwurfendes des Transportbandes relativ zur Ladefläche fortlaufend gesteuert werden, um die Ladefläche gleichmäßig und/oder nach einem vorgegebenen Beladungsprogramm zu beladen.

Es kann jedoch auch vorteilhaft sein, die Auftreffstelle auf der Ladefläche zu variieren, um eine gleichförmige Beladung der Ladefläche zu erreichen.

Es ist vorgesehen, dass das Erfassungs- und Steuerungssystem über die Verstellung des seitlichen Schwenkwinkels des schwenkbaren Transportbandes der Transportbandeinrichtung relativ zur Fahrtrichtung und die Verstellung des Höhenwinkels des schwenkbaren Transportbandes der Transportbandeinrichtung die Lage des Abwurfendes der Transportbandeinrichtung und damit der Auftreffstelle auf der Ladefläche steuert.

Das Erfassungs- und Steuerungssystem kann vor oder spätestens bei einer steuerungsmäßig nicht korrigierbaren Abweichung der Lage der Ladefläche relativ zur Lage des in Transportrichtung letzten oder einzigen Transportbandes der Transportbandeinrichtung und/oder des Maschinenrahmens ein Signal abgeben. Das Signal kann verwendet werden, um einen Maschinenstillstand herbeizuführen oder Maßnahmen zu treffen, um Kollisionen zwischen den Fahrzeugen zu vermeiden.

In Abhängigkeit von Ladeflächen unterschiedlicher Transportfahrzeuge und/oder in Abhängigkeit unterschiedlicher Beladungszustände der Ladefläche für unterschiedliche Lagen und/oder Auftreffstellen innerhalb der von dem Erfassungs- und Steuerungssystem erfassten Lage einer Ladefläche können Steuerungsdaten für den Schwenkwinkel, den Höhenwinkel und/oder die Fördergeschwindigkeit in einem Kennfeld gespeichert sein, das dem Erfassungs- und Steuerungssystem zur Verfügung steht. Mit Hilfe eines RFID-Systems können beispielsweise Ladeflächen unterschiedlicher Transportfahrzeuge identifiziert werden.

Mindestens eine Stelle der in der Regel im Wesentlichen rechteckigen Ladefläche, bzw. im Wesentlichen quaderförmigen Ladevolumens kann eine von dem Erfassungs- und Steuerungssystem detektierbare Markierung tragen.

Es kann ein Fortbewegungs-Steuerungssignal z. B. ein optisches oder akustisches Signal in Abhängigkeit von den Ortungssignalen erzeugt werden. Fortbewegungs-Steuerungssignale für das Transportfahrzeug sind grundsätzlich in der DE 10 2009 041 842 A1 beschrieben.
Die europäische Anmeldung EP 2 573 266 A2 ist ein Zwischendokument und zeigt eine Fräsmaschine, bei der eine Steuerungs- und Erfassungssystem den Auftreffpunkt des Fräsguts auf die Ladefläche derart regelt, dass das Fräsgut innerhalb der Ladefläche auftrifft. Des Weiteren beschreibt die DE 20 2007 005756 U1 eine Fräsmaschine, bei der über eine Kamera der Abwurfpunkt des Transportbandes vom Fahrer einsehbar ist.

Zur Lösung der Aufgabe dienen auch die Merkmale des Anspruchs 9.

Nach dem erfindungsgemäßen Verfahren ist vorgesehen, dass die veränderliche Lage der Ladefläche des Transportfahrzeugs und des in Transportrichtung letzten oder einzigen Transportbandes der Transportbandeinrichtung relativ zum Maschinenrahmen oder die veränderliche Lage der Ladefläche des Transportfahrzeugs relativ zu dem in Transportrichtung letzten oder einzigen Transportbandes fortlaufend von einem Erfassungs- und Steuerungssystem geortet wird und dass die Positionierung der Auftreffstelle des Fräsgutes über den Schwenkwinkel und/oder den Höhenwinkel und/oder die Fördergeschwindigkeit der Transportbandeinrichtung derart von dem Erfassungs- und Steuerungssystem fortlaufend automatisch gesteuert wird, dass das Fräsgut innerhalb der Ladefläche abgeworfen wird.

Die Positionierung der Auftreffstelle des Fräsgutes kann derart von dem Erfassungs- und Steuerungssystem fortlaufend automatisch gesteuert werden, dass das Fräsgut auf die Mitte der Ladefläche oder eine andere vorgebbare Auftreffstelle innerhalb der Ladefläche abgeworfen wird.

Die Lage der Ladefläche und/oder des in Transportrichtung letzten oder einzigen Transportbandes der Transportbandeinrichtung kann fortlaufend mit Hilfe eines Bildaufnahmesystems oder eines nicht optischen elektronischen Ortungssystems, insbesondere eines Radiofrequenzidentifikationssystems (RFID), geortet werden, das Daten zur Lagebestimmung der Ladefläche in Relation zum Maschinenrahmen oder zu dem in Transportrichtung letzten oder einzigen Transportbandes liefert.

Bei einem Ausführungsbeispiel kann ein Bild zur Lagebestimmung der Ladefläche in Relation zu dem Abwurfende des Transportbandes und/oder zur Bestimmung des Befüllungszustandes der Ladefläche von einem Bildaufnahmesystem mit einer vorgegebenen Abtastfrequenz aufgenommen und analysiert werden. Die analysierten Daten werden mit Soll-Lagewerten verglichen, und im Falle von festgestellten Abweichungen die Lage des Abwurfendes des Transportbandes und/oder die Fördergeschwindigkeit und/oder die Position des Transportfahrzeuges gesteuert werden.

Die Soll-Lagedaten können durch ein teach-in Verfahren ermittelt werden.

Die Position der geometrischen Mitte der Ladefläche kann durch Bildanalyse oder durch das nicht optische Ortungssystem und die Position der aktuellen Auftreffstelle auf der Ladefläche durch Bildanalyse ermittelt werden und eine Positionssteuerung der Lage des Abwurfendes und/oder der Auftreffstelle des Fräsgutes und eine Geschwindigkeitssteuerung der Fördergeschwindigkeit des Transportbandes in Abhängigkeit von der gewünschten Position der Auftreffstelle durchgeführt werden, so dass eine fortlaufende Regelung der Position der aktuellen Auftreffstelle durchgeführt wird.

Im Folgenden werden unter Bezugnahme auf die Zeichnungen Ausführungsbeispiele der Erfindung näher erläutert.

Es zeigen:
- Fig. 1: eine Vorderlader-Straßenfräsmaschine,
- Fig. 2: eine Hinterlader-Straßenfräsmaschine, und
- Fig. 3: eine Draufsicht auf eine Fräsmaschine gemäß Fig. 1.

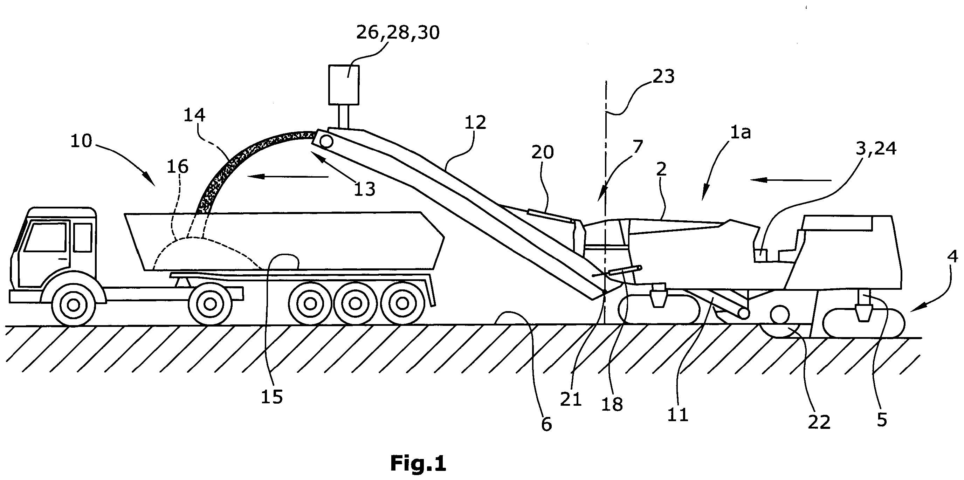

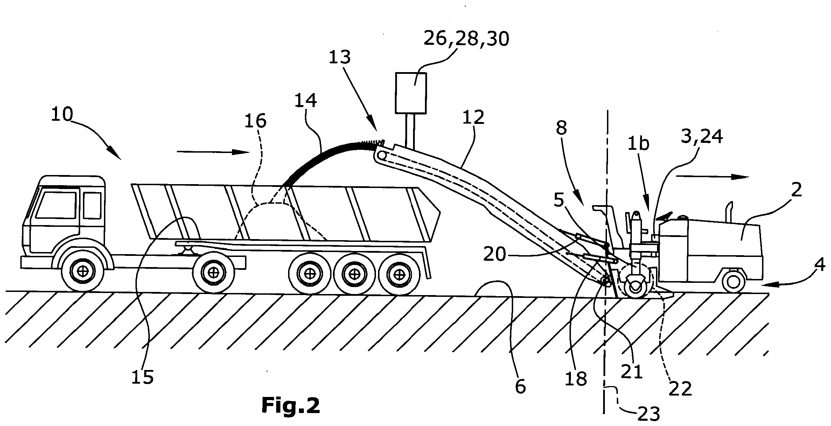

Fig. 1 zeigt eine Fräsmaschine am Beispiel einer Vorderlader-Straßenfräsmaschine 1a. Die Straßenbaumaschine 1 weist einen Maschinenrahmen 2 auf, der von einem beispielsweise aus Kettenlaufwerken oder Rädern bestehenden Fahrwerk 4 getragen wird, das über mindestens drei Höhenverstelleinrichtungen in Form von Hubsäulen 5 mit dem Maschinenrahmen 2 verbunden ist. Wie aus Fig. 2 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke des Fahrwerks 4 stehen.

Die in Fig. 1 gezeigte Straßenfräsmaschine weist eine Arbeitswalze 22 in Längsrichtung der Fräsmaschine 1a zwischen den Kettenlaufwerken des Fahrwerks 4 auf.

Die Fräsmaschinen 1a, 1b können Kettenlaufräder und/oder Räder aufweisen. Die Arbeitswalze kann über die den Maschinenrahmen 2 tragenden Hubsäulen 5 oder relativ zu dem Maschinenrahmen 2 höhenverstellbar sein.

Andere Bauformen einer Fräsmaschine 1b können die Arbeitswalze 22 beispielsweise auch in Höhe der hinteren Kettenlaufwerke oder Räder des Fahrwerks 4 aufweisen.

Ebenso kann die Transportbandeinrichtung mit mindestens einem Transportband 11,12 zum Abtransport des abgefrästen Fräsgutes am vorderen 7 oder hinteren Ende 8 der Fräsmaschine 1a, 1b angeordnet sein.

Fig.2 zeigt das Beispiel einer Hinterlader-Fräsmaschine 1b, bei der das Transportfahrzeug 10 in Rückwärtsfahrt hinter der Fräsmaschine hinterherfährt.

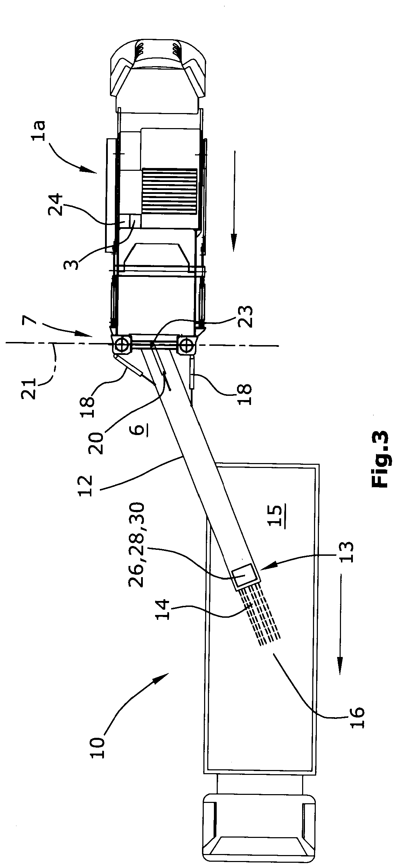

Sofern seitlich neben der Fräsmaschine 1a, 1b ausreichend Platz zur Verfügung steht, kann das Transportfahrzeug 10, wie in Fig. 3 gezeigt, auch in Vorwärtsfahrt neben der Fräsmaschine 1 bewegt werden.

Die Fahrtrichtungen der jeweiligen Fahrzeuge sind in den Fign. 1 bis 3 jeweils durch Pfeile angezeigt.

Bei dem Ausführungsbeispiel der Fig. 1 wird das von der Arbeitswalze 22 abgefräste Fräsgut über ein erstes ortsfestes Transportband 11 der Transportbandeinrichtung, das das Fräsgut 14 auf ein zweites schwenkbares Transportband 12 überträgt, auf die Ladefläche 15 des Transportfahrzeugs 10 abgeladen. Aufgrund der Geschwindigkeit des Transportbandes 12 wird das Fräsgut 14 nicht unmittelbar am Ende des Transportbandes 12 abgeladen, sondern das Fräsgut folgt einer Wurfparabel, so dass die Auftreffstelle 16 auf der Ladefläche 15 mit Abstand von dem freien Ende 13 des Transportbandes 12 befindlich ist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann der Fahrzeugführer der Fräsmaschine 1a, 1b den Höhenwinkel des Transportbandes 12 mit Hilfe einer KolbenZylindereinheit 20 einstellen. Der Höhenwinkel beeinflusst ebenso wie die Fördergeschwindigkeit des Transportbandes 12, die Wurfparabel des Fräsgutes 14 und die Position der Auftreffstelle 16.

Der aktuell eingestellte Höhenwinkel um eine horizontale erste Achse 21 bzw. Schwenkwinkel um eine vertikale zweite Achse 23 wird an ein Erfassungs- und Steuerungssystem 24 gemeldet, das des Weiteren mindestens einen Detektor 26 aufweist, der die Lage der Ladefläche 15 und/oder des in Transportrichtung letzten oder einzigen Transportbandes 12 fortlaufend detektiert. Dieser Detektor 26 kann entweder an der Fräsmaschine 1a, 1b an dem der Transportbandeinrichtung zugewandten Ende oder an dem freien Ende 13 des Transportbandes 12 angeordnet sein.

Das Erfassungs- und Steuerungssystem 24 kann in die Steuerung 3 für den Fahr- und Fräsbetrieb integriert sein oder mit dieser zumindest verbunden sein, um ggf. auch Daten über die Fahrgeschwindigkeit und/oder einen detektierten Lenkwinkel der Fräsmaschine 1a,1b und die Fördergeschwindigkeit des Transportbandes 12 zu erhalten.

Das Erfassungs- und Steuerungssystem 24 ortet die veränderliche Lage der Ladefläche 15 des Transportfahrzeugs 10 und des in Transportrichtung letzten oder einzigen Transportbandes 12 relativ zum Maschinenrahmen 2 und steuert die Positionierung der Auftreffstelle 16 des Fräsgutes 14 über den Schwenkwinkel und/oder den Höhenwinkel und/oder die Fördergeschwindigkeit der Transportbandeinrichtung fortlaufend und automatisch, so dass das abgeworfene Fräsgut 14 zumindest innerhalb der Ladefläche 15 auftrifft. Alternativ kann auch die veränderliche Lage der Ladefläche 15 des Transportfahrzeugs 10 relativ zu dem in Transportrichtung letzten oder einzigen Transportband 12 fortlaufend geortet werden, um die Steuerung durchzuführen.

Das Erfassungs- und Steuerungssystem 24 kann auch die Aufgabe übernehmen, die Ladefläche 15 gleichmäßig zu befüllen. Hierzu kann ein Beladungsprogramm vorgesehen werden, um die Ladefläche 15 nach einem vorbestimmten System zu beladen. Dabei kann der Befüllungszustand auf der Ladefläche 15 von einem Bildaufnahmesystem erfasst und analysiert werden, um die Fördergeschwindigkeit und/oder die Lage des Abwurfendes 13 des in Transportrichtung letzten oder einzigen Transportbandes 12 relativ zur Ladefläche 15 fortlaufend zu steuern.

Erfindungsgemäß sind in Abhängigkeit von Ladeflächen 15 unterschiedlicher Transportfahrzeuge 10 und/oder in Abhängigkeit unterschiedlicher Beladungszustände der Ladefläche 15 für unterschiedliche Lagen und/oder Auftreffstellen 16 Steuerungsdaten in einem Kennfeld gespeichert. Ein solcher Kennfeld-Speicher ist dabei in das Erfassungs- und Steuerungssystem 24 oder in der Steuerung 3 integriert.

Die Steuerungsdaten betreffen den Schwenkwinkel, den Höhenwinkel und/oder die Fördergeschwindigkeit des Transportbandes 12 für unterschiedliche Lagen und/oder Auftreffstellen 16 innerhalb der von den Erfassungs- und Steuerungssystem 24 erfassten Lage einer Ladefläche 15.

Das Erfassungs- und Steuerungssystem 24 erfasst die Lage der Ladefläche 15 und/oder des in Transportrichtung letzten oder einzigen Transportbandes 12 fortlaufend mit Hilfe eines Bildaufnahmesystems 28 oder eines nicht optischen elektronischen Ortungssystems, das Daten zur Lagebestimmung der Ladefläche 15 in Relation zu dem Maschinenrahmen 2 oder zu dem in Transportrichtung letzten oder einzigen Transportbandes 12 liefert. Die Informationen des Bildaufnahmesystems 28 kann durch für sich bekannte Bildanalysemethoden ausgewertet werden. Ein Beispiel für ein nicht optisches elektronisches Ortungssystems ist ein Radiofrequenz-Identifikationssystem (RFID), das zusätzlich noch die Möglichkeit der Identifikation einer bestimmten Ladefläche 15 eines bestimmten Transportfahrzeugs 10 ermöglicht.

Bei der Lokalisierung der Ladefläche 15 mit RFID werden stationäre RFID-Tags an dem Transportfahrzeug 10 insbesondere an der Ladefläche 15 verwendet.

Bei einer Lokalisierung mit Bluetooth-Sensorknoten als weiteres nicht optisches Lokalisierungsverfahren werden im Raum verteilte Sensorknoten als Markierungen verwendet und die Signalfeldstärke, die abhängig von der Entfernung ist, gemessen.

Selbstverständlich besteht auch die Möglichkeit, unterschiedliche Lokalisierungsverfahren in Kombination zu verwenden.

Generell kann mit optischen und quasi-optischen (Funk-) Messmethoden für Länge und Winkel, sowie mit verschiedenen Zeitmessverfahren für Zeitdifferenzen und Laufzeitdifferenzen gearbeitet werden.

Das Erfassungs- und Steuerungssystem 24 kann die Daten zur Lagebestimmung mit vorgegebenen Lagedaten vergleichen, um im Falle von Abweichungen von den vorgegebenen Soll-Lagedaten eine fortlaufende Lagesteuerung für die Position des Abwurfendes 13 und/oder der Auftreffstelle 16 des Fräsgutes 14 und/oder eine Geschwindigkeitssteuerung für die Fördergeschwindigkeit durchzuführen. Die Soll-Lagedaten können durch ein Teach-in-Verfahren ermittelt werden, indem die Positionen der Fahrzeuge 1a,1b,10 entsprechend realistischen Situationen variiert werden und die jeweils hierfür notwendigen Parameter, nämlich Schwenkwinkel, Höhenwinkel und Fördergeschwindigkeit des Transportbandes gespeichert werden. In gleicher Weise kann auch ein Beladungsprogramm erstellt werden. Dabei können auch Variationen der Steuerung, die z.B. durch Kurvenfahrt entstehen, berücksichtigt werden. Die durch den Lesevorgang eingelesenen Daten können dabei auch unterscheiden, ob das Transportfahrzeug 10 links oder rechts neben der Frässpur fährt oder in der Frässpur der Fräsmaschine 1a, 1b.

## Patentansprüche

1. Selbstfahrende Fräsmaschine (1a,1b),
- mit einem höhenverstellbaren Maschinenrahmen (2),
- mit einer Steuerung (3) für den Fahr- und Fräsbetrieb,
- mit einer Arbeitswalze (22),
- mit einem in Fahrtrichtung der Fräsmaschine (1a,1b) vor oder hinter der Arbeitswalze (22) angeordneten schwenkbaren letzten oder einzigen Transportband (12) einer Transportbandeinrichtung,
- wobei das Transportband (12) relativ zum Maschinenrahmen (2) um eine im Wesentlichen horizontal verlaufende erste Achse (21) unter einem Höhenwinkel, und um eine orthogonal zur ersten Achse (20) verlaufende zweite Achse (23) seitlich unter einem Schwenkwinkel verschwenkbar ist, und
- wobei das Transportband (12) das Fräsgut mit einer vorgegebenen Fördergeschwindigkeit auf eine Auftreffstelle (16) auf einer Ladefläche (15) eines Transportfahrzeugs (10) ablädt,
**dadurch gekennzeichnet,dass**
die Steuerung (3) ein Erfassungs- und Steuerungssystem (24) aufweist, welches die veränderliche Lage der Ladefläche (15) des Transportfahrzeugs (10) und des schwenkbaren Transportbandes (12) relativ zum Maschinenrahmen (2) oder die veränderliche Lage der Ladefläche (15) des Transportfahrzeugs (10) relativ zum Transportband (12) fortlaufend ortet und die Positionierung der Auftreffstelle (16) des Fräsgutes (14) über den Schwenkwinkel und/oder den Höhenwinkel und/oder die Fördergeschwindigkeit der Transportbandeinrichtung (12) derart fortlaufend automatisch steuert, dass das abgeworfene Fräsgut (14) innerhalb der Ladefläche (15) auftrifft, wobei in Abhängigkeit von Ladeflächen (15) unterschiedlicher Transportfahrzeuge (10) und/oder in Abhängigkeit unterschiedlicher Beladungszustände der Ladefläche (15) für unterschiedliche Lagen und/oder Auftreffstellen (16) innerhalb der von dem Erfassungs- und Steuerungssystem (24) erfassten Lage einer Ladefläche (15) Steuerungsdaten für den Schwenkwinkel, den Höhenwinkel und/oder die Fördergeschwindigkeit in einem Kennfeld gespeichert sind, wobei der Kennfeld-Speicher in dem Erfassungs- und Steuerungssystem (24) oder in die Steuerung (3) integriert ist.

2. Fräsmaschine nach Anspruch 1, **dadurch gekennzeichnet, dass** das Erfassungs- und Steuerungssystem (24) die Positionierung der Auftreffstelle (16) der Transportbandeinrichtung (12) derart fortlaufend automatisch steuert, dass das abgeworfene Fräsgut (14) auf die Mitte der Ladefläche (15) oder eine andere vorgebbare Auftreffstelle (16) innerhalb der Ladefläche (15) auftrifft.

3. Fräsmaschine nach Anspruch 1 oder 2, **dadurch gekennzeichnet, dass** das Erfassungs- und Steuerungssystem (24) mindestens einen Detektor (26) aufweist, der die Lage der Ladefläche (15) und/oder des Transportbandes (12) fortlaufend detektiert, und/oder weitere Detektoren aufweist, die den Schwenkwinkel, den Höhenwinkel und/oder die Fördergeschwindigkeit der Transportbandeinrichtung (12) detektieren.

4. Fräsmaschine nach einem der Ansprüche 1 bis 3, **dadurch gekennzeichnet, dass** das Erfassungs- und Steuerungssystem (24) die Lage der Ladefläche (15) und/oder des Transportbandes (12) fortlaufend mit Hilfe eines ersten Bildaufnahmesystems (28) oder eines nicht optischen elektronischen Ortungssystems, insbesondere eines Radiofrequenzidentifikationssystems (RFID), ortet, das Daten zur Lagebestimmung der Ladefläche (15) in Relation zum Maschinenrahmen (2) oder zum Transportband (12) liefert.

5. Fräsmaschine nach Anspruch 4, **dadurch gekennzeichnet, dass** das Erfassungs- und Steuerungssystem (24) die Daten zur Lagebestimmung mit vorgegebenen Soll-Lagedaten vergleicht, um im Falle von Abweichungen von den vorgegebenen Soll-Lagedaten eine fortlaufende Lagesteuerung für die Position eines Abwurfendes (13) der Transportbandeinrichtung (12) und/oder der Auftreffstelle (16) und/oder eine Geschwindigkeitssteuerung für die Fördergeschwindigkeit entsprechend einer vorgegebenen Auftreffstelle (16) durchzuführen.

6. Fräsmaschine nach einem der Ansprüche 4 oder 5, **dadurch gekennzeichnet, dass** ein Bildaufnahmesystem oder ein Detektor für das Radiofrequenzidentifikationssystems (RFID) am Abwurfende (13) des in Förderrichtung des Fräsgutes (14) einzigen oder letzten Transportbandes (12) angeordnet ist.

7. Fräsmaschine nach einem der Ansprüche 1 bis 6, **dadurch gekennzeichnet, dass** das Erfassungs- und Steuerungssystem (24) vor oder spätestens bei einer steuerungsmäßig nicht korrigierbaren Abweichung der Lage der Ladefläche (15) relativ zur Lage des Transportbandes (12) und/oder des Maschinenrahmens (2) ein Signal abgibt.

8. Fräsmaschine nach einem der Ansprüche 1 bis 7, **dadurch gekennzeichnet, dass** das Erfassungs- und Steuerungssystem (24) dazu ausgebildet ist, mindestens eine Stelle der im Wesentlichen rechteckigen Ladefläche (15), oder im Wesentlichen quaderförmigen Ladevolumens (15) als detektierbare Markierung zu erfassen.

9. Verfahren zum Abladen von abgearbeitetem Fräsgut (14) einer selbstfahrenden Fräsmaschine (1a,1b) auf eine Auftreffstelle (16) auf einer Ladefläche (15) eines Transportfahrzeuges (10), bei dem
- die Fräsmaschine (1a,1b) für den Fahr- und Fräsbetrieb gesteuert wird,
- das von einer Arbeitswalze abgearbeitete Fräsgut (14) mit einer in Fahrtrichtung der Fräsmaschine (1a,1b) vor oder hinter der Arbeitswalze angeordneten Transportbandeinrichtung auf die Ladefläche (15) eines Transportfahrzeugs (10) mit einer vorgegebenen Fördergeschwindigkeit abgeworfen wird, und
- wobei ein letztes oder einziges Transportband (12) der Transportbandeinrichtung relativ zum Maschinenrahmen (2) der Fräsmaschine (1a,1b) seitlich unter einem Schwenkwinkel verschwenkt und hinsichtlich der Abwurfhöhe unter einem Höhenwinkel verstellt werden kann,
**dadurch gekennzeichnet, dass**
die veränderliche Lage der Ladefläche (15) des Transportfahrzeugs (10) und des Transportbandes (12) relativ zum Maschinenrahmen (2) oder die veränderliche Lage der Ladefläche (15) des Transportfahrzeugs (10) relativ zum Transportband (12) fortlaufend von einem Erfassungs- und Steuerungssystem (24) geortet wird und dass die Positionierung der Auftreffstelle (16) des Fräsgutes (14) über den Schwenkwinkel und/oder den Höhenwinkel und/oder die Fördergeschwindigkeit der Transportbandeinrichtung (12) derart von dem Erfassungs- und Steuerungssystem (24) fortlaufend automatisch gesteuert wird, dass das Fräsgut innerhalb der Ladefläche (15) abgeworfen wird, wobei in Abhängigkeit von Ladeflächen (15) unterschiedlicher Transportfahrzeuge (10) und/oder in Abhängigkeit unterschiedlicher Beladungszustände der Ladefläche (15) für unterschiedliche Lagen und/oder Auftreffstellen (16) innerhalb der von dem Erfassungs- und Steuerungssystem (24) erfassten Lage einer Ladefläche (15) Steuerungsdaten für den Schwenkwinkel, den Höhenwinkel und/oder die Fördergeschwindigkeit in einem Kennfeld gespeichert werden.

10. Verfahren nach Anspruch 9, **dadurch gekennzeichnet, dass** die Positionierung der Auftreffstelle (16) des Fräsgutes (14) derart von dem Erfassungs- und Steuerungssystem (24) fortlaufend automatisch gesteuert wird, dass das Fräsgut auf die Mitte der Ladefläche (15) oder eine andere vorgebbare Auftreffstelle (16) innerhalb der Ladefläche (15) abgeworfen wird.

11. Verfahren nach Anspruch 9 oder 10, **dadurch gekennzeichnet, dass** die Lage der Ladefläche (15) und/oder des Transportbandes (12) fortlaufend geortet wird, wobei Daten zur Lagebestimmung der Ladefläche (15) in Relation zum Maschinenrahmen (2) oder zum Transportband (12) erzeugt werden und
mit gespeicherten Soll-Lagedaten verglichen werden, wobei dann bei festgestellten Abweichungen die Lage des Abwurfendes (13) des Transportbandes (12), und/oder die Fördergeschwindigkeit des Transportbandes (12) und/oder die Position des Transportfahrzeuges (10) gesteuert wird, wobei
die Soll-Lagedaten vorzugsweise durch ein teach-in Verfahren ermittelt werden.

12. Verfahren nach einem der Ansprüche 9 bis 11, **dadurch gekennzeichnet, dass** der Befüllungszustand auf der Ladefläche (15) von einem Bildaufnahmesystem erfasst und analysiert wird, und die Fördergeschwindigkeit des Transportbandes (12) und/oder die Lage des Abwurfendes (13) des Transportbandes (12) relativ zur Ladefläche (15) fortlaufend gesteuert wird, um die Ladefläche (15) gleichmäßig und/oder nach einem vorgegebenen Beladungsprogramm zu beladen.

13. Verfahren nach einem der Ansprüche 9 bis 12, **dadurch gekennzeichnet, dass** die Ladefläche (15) geortet wird und die Lage und die Fördergeschwindigkeit des Transportbandes (12) derart geregelt wird, dass die Auftreffstelle (16) auf der Ladefläche (15) unabhängig von den Bewegungen der Fräsmaschine (1a, 1b) und des Transportfahrzeugs (10) stets an der von der Steuerung (3) vorgegebenen Stelle gehalten wird.

14. Verfahren nach einem der Ansprüche 9 bis 13, **dadurch gekennzeichnet, dass** die Position der geometrischen Mitte der Ladefläche (15) durch Bildanalyse oder durch das nicht optische Ortungssystem und die Position der aktuellen Auftreffstelle (16) auf der Ladefläche (15) durch Bildanalyse ermittelt wird und eine Positionssteuerung der Position des Abwurfendes (13) des Transportbandes (12) und/oder der Auftreffstelle (16) und eine Geschwindigkeitssteuerung der Fördergeschwindigkeit des Transportbandes (12) in Abhängigkeit von der gewünschten Position der Auftreffstelle (16) durchgeführt wird, so dass eine fortlaufende Regelung der Position der aktuellen Auftreffstelle (16) durchgeführt wird.

## Claims

1. Automotive milling machine (1a,1b),
- with a height-adjustable machine frame (2),
- with a controller (3) for the travelling and milling operation,
- with a working drum (22),
- with a slewable last or single transport conveyor (12) of a transport conveyor device arranged in front of or behind the working drum (22) as seen in the direction of travel of the milling machine (1a,1b),
- where the transport conveyor (12) is slewable, relative to the machine frame (2), about an essentially vertical first axis (21) under an elevation angle, and sideways about a second axis (23) orthogonal to the first axis (20) under a slewing angle, and
- where the transport conveyor (12) discharges the milled material at a specified conveying speed onto a point of impingement (16) on a loading surface (15) of a transport vehicle (10),
**characterized in that**
the controller (3) comprises a detection and control system (24) which continuously locates the alterable position of the loading surface (15) of the transport vehicle (10) and of the slewable transport conveyor (12) relative to the machine (2), or the alterable position of the loading surface (15) of the transport vehicle (10) relative to the transport conveyor (12), and continuously controls positioning of the point of impingement (16) of the milled material (14) automatically via the slewing angle and/or the elevation angle and/or the conveying speed of the transport conveyor device (12) in such a way that the discharged milled material (14) impinges within the loading surface (15), wherein control data for the slewing angle, the elevation angle and/or the conveying speed are stored in a map in accordance with the loading surfaces (15) of different transport vehicles (10) and/or in accordance with different loading conditions of the loading surface (15) for different positions and/or points of impingement (16) within the position of a loading surface (15) detected by the detection and control system (24), wherein the map memory can be integrated in the detection and control system (24) or in the controller (3).

2. Milling machine in accordance with claim 1, **characterized in that** the detection and control system (24) continuously controls positioning of the point of impingement (16) of the transport conveyor device (12) automatically in such a way that the discharged milled material (14) impinges in the centre of the loading surface (15) or at another specifiable point of impingement (16) within the loading surface (15).

3. Milling machine in accordance with claim 1 or 2, **characterized in that** the detection and control system (24) comprises no less than one detector (26) which continuously detects the position of the loading surface (15) and/or of the transport conveyor (12), and/or comprises additional detectors which detect the slewing angle, the elevation angle and/or the conveying speed of the transport conveyor device (12).

4. Milling machine in accordance with one of the claims 1 to 3, **characterized in that** the detection and control system (24) continuously locates the position of the loading surface (15) and/or of the transport conveyor (12) by means of a first image-recording system (28) or a non-optical electronic positioning system, in particular a radio-frequency identification system (RFID), which supplies data for determining the position of the loading surface (15) in relation to the machine frame (2) or to the transport conveyor (12).

5. Milling machine in accordance with claim 4, **characterized in that** the detection and control system (24) compares the data for determining the position with specified position data in order to, in the event of any deviations from the specified target position data, perform a continuous position control for the position of a discharge end (13) of the transport conveyor device (12) and/or of the point of impingement (16) and/or a speed control for the conveying speed in accordance with a specified point of impingement (16).

6. Milling machine in accordance with one of the claims 4 or 5, **characterized in that** an image-recording system or a detector for the radio-frequency identification system (RFID) is arranged at the discharge end (13) of the single or last transport conveyor (12) as seen in the conveying direction of the milled material (14).

7. Milling machine in accordance with one of the claims 1 to 6, **characterized in that** the detection and control system (24) emits a signal prior to or latest in the event of any deviation not rectifiable by means of control of the position of the loading surface (15) relative to the position of the transport conveyor (12) and/or the machine frame (2).

8. Milling machine in accordance with one of the claims 1 to 7, **characterized in that** no less than one point of the essentially rectangular loading surface (15) or essentially cuboid-shaped loading volume (15) carries a marking detectable by the detection and control system (24).

9. Method for discharging removed milled material (14) of an automotive milling machine (1a,1b) onto a point of impingement (16) on a loading surface (15) of a transport vehicle (10), where
- the milling machine (1a,1b) is controlled for the travelling and milling operation,
- the milled material (14) removed by a working drum is discharged onto the loading surface (15) of a transport vehicle (10) at a specified conveying speed by means of a transport conveyor device arranged in front of or behind the working drum as seen in the direction of travel of the milling machine (1a,1b), and
- where a last or single transport conveyor (12) of the transport conveyor device can be slewed sideways relative to the machine frame (2) of the milling machine (1a,1b) about a slewing angle and, in terms of the discharge height, can be adjusted under an elevation angle,
**characterized in that**
the alterable position of the loading surface (15) of the transport vehicle (10) and of the transport conveyor (12) relative to the machine frame (2), or the alterable position of the loading surface (15) of the transport vehicle (10) relative to the transport conveyor (12) is continuously located by a detection and control system (24), and that positioning of the point of impingement (16) of the milled material (14) is continuously controlled automatically by the detection and control system (24) via the slewing angle and/or the elevation angle and/or the conveying speed of the transport conveyor device (12) in such a way that the milled material is discharged within the loading surface (15), wherein control data for the slewing angle, the elevation angle and/or the conveying speed are stored in a map in accordance with the loading surfaces (15) of different transport vehicles (10) and/or in accordance with different loading conditions of the loading surface (15) for different positions and/or points of impingement (16) within the position of a loading surface (15) detected by the detection and control system (24).

10. Method in accordance with claim 9, **characterized in that** positioning of the point of impingement (16) of the milled material (14) is continuously controlled automatically by the detection and control system (24) in such a way that the milled material is discharged in the centre of the loading surface (15) or at another specifiable point of impingement (16) within the loading surface (15).

11. Method in accordance with claim 9 or 10, **characterized in that** the position of the loading surface (15) and/or of the transport conveyor (12) is continuously located, wherein data for determining the position of the loading surface (15) in relation to the machine frame (2) or to the transport conveyor (12).are generated and compared with stored target position data, and the position of the discharge end (13) of the transport conveyor (12) and/or the conveying speed of the transport conveyor (12) and/or the position of the transport vehicle (10) are then controlled in the event of any deviations being determined, wherein the target position data are determined by means of a teach-in procedure.

12. Method in accordance with one of the claims 9 to 11, **characterized in that** the filling condition on the loading surface (15) is detected and analysed by an image-recording system, and the conveying speed of the transport conveyor (12) and/or the position of the discharge end (13) of the transport conveyor (12) relative to the loading surface (15) is continuously controlled in order to load the loading surface (15) uniformly and/or in accordance with a specified loading programme.

13. Method in accordance with one of the claims 9 to 12, **characterized in that** the loading surface (15) is located and the position and the conveying speed of the transport conveyor (12) are regulated in such a way that the point of impingement (16) on the loading surface (15) is always maintained at the position specified by the controller (3) independent of the movements of the milling machine (1a,1b) and of the transport vehicle (10).

14. Method in accordance with one of the claims 9 to 13, **characterized in that** the position of the geometrical centre of the loading surface (15) is determined by means of image analysis or by means of the non-optical positioning system, and the position of the current point of impingement (16) on the loading surface (15) is determined by means of image analysis, and a positioning control for the position of the discharge end (13) of the transport conveyor (12) and/or for the point of impingement (16), and a speed control for the conveying speed of the transport conveyor (12) is performed in accordance with the desired position of the point of impingement (16) so that a continuous regulation of the position of the current point of impingement (16) is performed.

## Revendications

1. Fraiseuse automobile (1a, 1b),
- dotée d'un châssis de machine (2) réglable en hauteur,
- dotée d'une commande (3) pour le roulage et le fonctionnement de la fraise,
- dotée d'un rouleau de travail (22),
- dotée d'une dernière ou unique bande convoyeuse (12) pivotante d'un dispositif de bande convoyeuse, disposée devant ou derrière le rouleau de travail (22) dans la direction de déplacement de la fraiseuse (1a, 1b),
- dans laquelle la bande convoyeuse (12) peut pivoter, par rapport au châssis de machine (2), selon un angle d'élévation autour d'un premier axe (21) sensiblement horizontal, et latéralement selon un angle de pivot autour d'un deuxième axe (23) orthogonal au premier axe (20), et
- dans laquelle la bande convoyeuse (12) évacue le produit de fraisage avec une vitesse de transport prédéfinie sur un point d'impact (16) sur une surface de chargement (15) d'un véhicule de transport (10),
**caractérisée**
**en ce que** la commande (3) comporte un système de saisie et de commande (24), lequel localise en continu la position variable de la surface de chargement (15) du véhicule de transport (10) et de la bande convoyeuse pivotante (12) par rapport au châssis de machine (2) ou la position variable de la surface de chargement (15) du véhicule de transport (10) par rapport à la bande convoyeuse (12) et commande automatiquement en continu le positionnement du point d'impact (16) du produit de fraisage (14) par le biais de l'angle de pivot et/ou de l'angle d'élévation et/ou de la vitesse de transport du dispositif de bande convoyeuse (12) de telle sorte que le produit de fraisage (14) éjecté frappe à l'intérieur de la surface de chargement (15), dans laquelle en fonction des surfaces de chargement (15) de différents véhicules de transport (10) et/ou en fonction de différents états de chargement de la surface de chargement (15) pour différentes positions et/ou points d'impact (16) à l'intérieur de la position d'une surface de chargement (15) saisie par le système de saisie et de commande (24) des données de commande pour l'angle de pivot, l'angle d'élévation et/ou la vitesse de transport sont enregistrés dans un diagramme caractéristique, dans laquelle l'enregistreur de diagramme caractéristique est intégré dans le système de saisie et de commande (24) ou dans la commande (3).

2. Fraiseuse selon la revendication 1, **caractérisée en ce que** le système de saisie et de commande (24) commande automatiquement en continu le positionnement du point d'impact (16) du dispositif de bande convoyeuse (12) de telle sorte que le produit de fraisage (14) éjecté frappe au milieu de la surface de chargement (15) ou sur un autre point d'impact (16) prédéfinissable à l'intérieur de la surface de chargement (15).

3. Fraiseuse selon la revendication 1 ou 2, **caractérisée en ce que** le système de saisie et de commande (24) comporte au moins un détecteur (26), lequel détecte en continu la position de la surface de chargement (15) et/ou de la bande convoyeuse (12), et/ou comporte des détecteurs supplémentaires, lesquels détectent l'angle de pivot, l'angle d'élévation et/ou la vitesse de transport du dispositif de bande convoyeuse (12) .

4. Fraiseuse selon l'une des revendications 1 à 3, **caractérisée en ce que** le système de saisie et de commande (24) localise en continu la position de la surface de chargement (15) et/ou de la bande convoyeuse (12) à l'aide d'un premier système de prise de vue (28) ou d'un système de localisation électronique non optique, en particulier d'un système de radio-identification (RFID), lequel fournit des données pour la détermination de position de la surface de chargement (15) par rapport au châssis de machine (2) ou à la bande convoyeuse (12).

5. Fraiseuse selon la revendication 4, **caractérisée en ce que** le système de saisie et de commande (24) compare les données de détermination de position avec des données de position de consigne prédéfinies, afin d'effectuer, en cas de déviations par rapport aux données de position de consigne prédéfinies, une commande en continu de positionnement pour la position d'une décharge (13) du dispositif de bande convoyeuse (12) et/ou du point d'impact (16) et/ou une commande de vitesse pour la vitesse de transport correspondant à un point d'impact (16) prédéfinissable.

6. Fraiseuse selon l'une des revendications 4 ou 5, **caractérisée en ce qu'**un système de prise de vue ou un détecteur pour le système de radio-identification (RFID) est disposé à l'extrémité d'éjection (13) de l'unique ou dernière bande convoyeuse (12) dans la direction de transport du produit de fraisage (14).

7. Fraiseuse selon l'une des revendications 1 à 6, **caractérisée en ce que** le système de saisie et de commande (24) émet un signal avant ou au plus tard lors d'une déviation incorrigible par moyens de commande de la position de la surface de chargement (15) par rapport à la bande convoyeuse (12) et/ou au châssis de machine (2).

8. Fraiseuse selon l'une des revendications 1 à 7, **caractérisée en ce que** le système de saisie et de commande (24) est réalisé de façon à saisir en tant que marquage détectable au moins un point de la surface de chargement (15) sensiblement rectangulaire ou du volume de chargement (15) sensiblement parallélépipédique.

9. Procédé d'évacuation de produit de fraisage (14) traité d'une fraiseuse automobile (1a, 1b) sur un point d'impact (16) sur une surface de chargement (15) d'un véhicule de transport (10), lors duquel
- la fraiseuse (1a, 1b) est commandée pour le roulage et le fonctionnement de la fraise,
- le produit de fraisage (14) traité par un rouleau de travail est éjecté avec une vitesse de transport prédéfinie sur la surface de chargement (15) d'un véhicule de transport (10) par un dispositif de bande convoyeuse disposé devant ou derrière le rouleau de travail (22) dans la direction de la fraiseuse (1a, 1b), et
- dans lequel une dernière ou unique bande convoyeuse (12) du dispositif de bande convoyeuse peut, par rapport au châssis de machine (2) de la fraiseuse (1a, 1b) être pivotée latéralement d'un angle de pivot et ajustée d'un angle d'élévation concernant la hauteur d'éjection,
**caractérisé**
**en ce que** la position variable de la surface de chargement (15) du véhicule de transport (10) et de la bande convoyeuse pivotante (12) par rapport au châssis de machine (2) ou la position variable de la surface de chargement (15) du véhicule de transport (10) par rapport à la bande convoyeuse (12) est localisée en continu par un système de saisie et de commande (24) et **en ce que** le positionnement du point d'impact (16) du produit de fraisage (14) est commandé automatiquement en continu par le système de saisie et de commande (24), par le biais de l'angle de pivot et/ou de l'angle d'élévation et/ou de la vitesse de transport du dispositif de bande convoyeuse (12), de telle sorte que le produit de fraisage (14) est éjecté à l'intérieur de la surface de chargement (15), dans lequel en fonction des surfaces de chargement (15) de différents véhicules de transport (10) et/ou en fonction de différents états de chargement de la surface de chargement (15) pour différentes positions et/ou points d'impact (16) à l'intérieur de la position d'une surface de chargement (15) saisie par le système de saisie et de commande (24) des données de commande pour l'angle de pivot, l'angle d'élévation et/ou la vitesse de transport sont enregistrées dans un diagramme caractéristique.

10. Procédé selon la revendication 9, **caractérisé en ce que** le positionnement du point d'impact (16) du dispositif de bande convoyeuse est commandé automatiquement en continu par le système de saisie et de commande (24) de telle sorte que le produit de fraisage (14) est éjecté au milieu de la surface de chargement (15) ou sur un autre point d'impact (16) prédéfinissable à l'intérieur de la surface de chargement (15).

11. Procédé selon la revendication 9 ou 10, **caractérisé en ce que** la position de la surface de chargement (15) et/ou de la bande convoyeuse (12) est localisée en continu, dans lequel des données pour la détermination de position de la surface de chargement (15) par rapport au châssis de machine (2) ou à la bande convoyeuse (12) sont obtenues et
sont comparées à des données de position de consigne enregistrées, dans lequel ensuite en cas de déviations établies la position de la décharge (13) de la bande convoyeuse (12) et/ou la vitesse de transport de la bande convoyeuse (12) et/ou la position du véhicule de transport (10) sont commandées, dans lequel
les données de position de consigne sont de préférence déterminée par un procédé d'apprentissage.

12. Procédé selon l'une des revendications 9 à 11, **caractérisé en ce que** l'état de remplissage sur la surface de chargement (15) est saisi et analysé par un système de prise de vue, et la vitesse de transport de la bande convoyeuse (12) et/ou la position de la décharge (13) de la bande convoyeuse (12) par rapport à la surface de chargement (15) est commandée en continu, afin de charger la surface de chargement (15) uniformément et/ou selon un programme de chargement prédéfini.

13. Procédé selon l'une des revendications 9 à 12, **caractérisé en ce que** la surface de chargement (15) est localisée et la position et la vitesse de transport de la bande convoyeuse (12) sont réglées de telle sorte que le point d'impact (16) sur la surface de chargement (15) est constamment maintenu au point prédéfini par la commande (3) indépendamment des mouvements de la fraiseuse (1a, 1b) et du véhicule de transport (10).

14. Procédé selon l'une des revendications 9 à 13, **caractérisé en ce que** la position du milieu géométrique de la surface de chargement (15) est déterminée par analyse d'image ou par le système de localisation non optique et la position du point d'impact (16) actuel sur la surface de chargement (15) est déterminée par analyse d'image et une commande de position de la position de la décharge (13) de la bande convoyeuse (12) et/ou du point d'impact (16) et une commande de vitesse de la vitesse de transport de la bande convoyeuse (12) est effectuée en fonction de la position souhaitée du point d'impact (16), de sorte qu'une régulation en continu de la position du point d'impact (16) actuel est effectuée.
